# FASCICULE DE BREVET EUROPEEN

(11) **EP 3 230 766 B1**
(45) Date de publication et mention de la délivrance du brevet: **06.05.2020**
(21) Numéro de dépôt: 15805537.6
(22) Date de dépôt: 09.12.2015
(51) Int. Cl.: G01S 19/21, G01S 19/08, G01S 19/15, G01S 19/39, G01S 19/49, G01S 19/42

(54) **PROCÉDÉ ET SYSTÈME DE VALIDATION DE GÉOLOCALISATION PAR SATELLITE**
VERFAHREN UND SYSTEM ZUR VALIDIERUNG DER GEOPOSITIONIERUNG MIT EINEM SATELLIT
METHOD AND SYSTEM TO VALIDATE GEOPOSITIONING BY SATELLITE

(30) Priorité: 12.12.2014 FR 1402840
(43) Date de publication de la demande: 18.10.2017
(73) Titulaire: Thales, 92400 Courbevoie (FR)
(72) Inventeur: REVOL, Marc, 26027 Valence Cedex (FR); LAVIRON, Philippe, 26027 Valence Cedex (FR)
(74) Mandataire: Lavoix
(86) Numéro de dépôt international: PCT/EP2015/079114
(87) Numéro de publication internationale: WO 2016/091949

(56) Documents cités:
- EP-A1- 2 674 779
- US-A1- 2013 106 655
- US-B1- 7 570 204
- O'HANLON BRADY W ET AL: "Real-Time GPS Spoofing Detection via Correlation of Encrypted Signals", NAVIGATION, INSTITUTE OF NAVIGATION, FAIRFAX, VA, US, vol. 60, no. 4, 1 décembre 2013 (2013-12-01), pages 267-278, XP056007262, ISSN: 0028-1522

## Description

La présente invention concerne un procédé et un système de validation d'un dispositif de radio-navigation embarqué à bord d'un porteur mobile, comportant un dispositif de géolocalisation par satellite apte à recevoir un signal radioélectrique composite comportant une pluralité de signaux de radio-navigation émis chacun par un satellite émetteur et comportant des informations de synchronisation de temps et de référence de position, et à mettre en œuvre un traitement des signaux de radio-navigation reçus pour calculer des premières informations de navigation.

Le domaine de l'invention concerne la sécurisation, le renforcement et l'augmentation de la géolocalisation par satellite, en particulier dans le cadre de l'utilisation d'équipements de géolocalisation pour la navigation de porteurs en mouvement.

Elle trouve de nombreuses applications, par exemple dans l'aéronautique, le transport maritime, le guidage autoroutier, le guidage d'engins et de robots.

Un domaine d'application privilégié est celui de l'approche de précision en aéronautique, basée sur l'utilisation de systèmes de navigation GNSS (« Global Navigation Satellite System »). On connaît par exemple le système américain GPS (Global Positioning System) et le système européen GALILEO.

Un récepteur GNSS est un dispositif apte à recevoir des signaux radioélectriques émis par une pluralité de satellites et à fournir, après calcul, des informations de synchronisation de temps et de référence de position du porteur dans un repère géographique.

Chaque récepteur GNSS extrait des informations de temps reçu et de phase porteuse transmises dans des signaux radioélectriques émis par différents satellites, et calcule, pour chaque satellite en vue, à partir de ces informations reçues, une mesure de positionnement, qui est une estimation de la distance entre le dispositif de géolocalisation lui-même et le satellite en vue, également appelée pseudo-distance. La pseudo-distance est différente de la distance effective entre le satellite considéré et le dispositif de géolocalisation à cause des erreurs d'estimation du temps de propagation, dues par exemple aux conditions atmosphériques dans la troposphère, dans la ionosphère et de l'erreur de synchronisation de l'horloge interne du récepteur de géolocalisation. Il est cependant possible d'éliminer les erreurs communes (dont le biais de temps du récepteur) en s'appuyant sur les informations transmises par une pluralité de satellites distincts.

Dans de nombreuses applications de navigation, la précision, la disponibilité et l'intégrité du calcul du positionnement et du biais de temps sont particulièrement importants pour la sécurité du porteur.

Il existe plusieurs causes susceptibles d'affecter l'intégrité du positionnement de géolocalisation calculé, par exemple d'éventuelles pannes ou dysfonctionnements des satellites, de la chaîne de réception du dispositif de géolocalisation, des perturbations et interférences diverses et/ou un brouillage malveillant intentionnel.

Des méthodes connues d'augmentation de la géolocalisation permettent d'améliorer la précision et de fournir des solutions plus intègres et plus robustes, par exemples les systèmes RAIM (« receiver autonomous integrity monitoring »), SBAS (pour « satellite-based augmentation system »), GBAS (« ground-based augmentation system »).

Le document US2013/106655 A1 est une demande de brevet décrivant un procédé et un système de calcul de données de géolocalisation avec authentification.

Le document US 7 570 204 B1 décrit un système d'amélioration de la géolocalisation.

Cependant, ces méthodes présentent des limites.

Pour un système embarqué, l'amélioration de précision et de robustesse de traitement peuvent impliquer une grande complexité algorithmique et nécessiter des ressources de traitement importantes.

De plus, la conception de systèmes embarqués certifiés est contrainte par les réglementations en vigueur associées aux architectures de traitements standardisées.

Ainsi, il existe un besoin de valider et d'améliorer la précision de géolocalisation fournie par des dispositifs de radio-navigation embarqués, tout en respectant les contraintes précitées.

A cet effet, le procédé de validation d'un dispositif de radio-navigation embarqué à bord d'un porteur mobile, comporte un dispositif de géolocalisation par satellite apte à recevoir un signal radioélectrique composite comportant une pluralité de signaux de radio-navigation émis chacun par un satellite émetteur et comportant des informations de synchronisation de temps et de référence de position, le dispositif de radio-navigation étant apte à mettre en œuvre un traitement des signaux de radio-navigation reçus pour calculer des premières informations de navigation comportant des informations de position de géolocalisation, vitesse et temps du porteur.

Le procédé comporte les étapes consistant à :
- transmettre, par ledit dispositif de radio-navigation, des signaux numérisés en bande de base à partir des signaux de radio-navigation reçus à une station de traitement de référence,
- mettre en œuvre, par ladite station de traitement de référence, un traitement analogue au traitement effectué par ledit dispositif de radio-navigation des signaux numérisés en bande de base pour calculer des deuxièmes informations de navigation,
- valider les premières informations de navigation en fonction des deuxièmes informations de navigation calculées par la station de traitement de référence.

Avantageusement, l'invention permet de dupliquer et d'augmenter les traitements effectués à bord dans une station de traitement de référence, située par exemple au sol, et donc de s'affranchir des contraintes imposées sur le matériel embarqué.

En particulier, une des finalités de l'invention est de permettre la détection de défaillances matérielles du dispositif de radio-navigation embarqué, le traitement effectué par la station de traitement de référence étant effectué de manière redondante et ségréguée, complément indépendamment du traitement effectué à bord.

Le procédé selon l'invention peut également présenter une ou plusieurs des caractéristiques ci-dessous :
- le calcul des premières informations de navigation utilise en outre des informations de positionnement inertiel fournies par un module de positionnement inertiel associé au dispositif de radio-navigation, et l'étape de transmission comporte en outre une transmission desdites informations de positionnement inertiel associé au dispositif de radio-navigation vers la station de traitement de référence ;
- une étape, mise en œuvre par ladite station de traitement de référence, consistant à effectuer au moins un traitement complémentaire des signaux numérisés en bande de base reçus, non effectué par le dispositif de radio-navigation, de manière à obtenir des deuxièmes informations de navigation de précision augmentée ;
- la station de traitement de référence est apte à calculer des deuxièmes informations de navigation à partir de signaux de radio-navigation émis par une pluralité de constellations de satellites, chaque constellation de satellites émettant selon un système de géolocalisation donné ;
- un traitement complémentaire consiste en la mise en œuvre d'une étape d'augmentation de précision spatiale, mettant en œuvre le traitement d'informations locales de corrections différentielles reçues d'une station de référence au sol ;
- au moins un traitement complémentaire consiste en la mise en œuvre d'une étape de calcul de positionnement de géolocalisation mettant en œuvre des fréquences des porteuses des signaux numérisés en bande de base reçus ;
- au moins un traitement complémentaire consiste en la mise en œuvre d'une surveillance d'intégrité des signaux numérisés en bande de base reçus ;
- au moins un traitement complémentaire consiste en la mise en œuvre d'une surveillance de brouillage et de leurrage des signaux numérisés en bande de base.

Selon un deuxième aspect, l'invention concerne un système de validation de géolocalisation par satellite, comprenant un dispositif de radio-navigation embarqué à bord d'un porteur mobile, comportant un dispositif de géolocalisation par satellite apte à recevoir un signal radioélectrique composite comportant une pluralité de signaux de radio-navigation émis chacun par un satellite émetteur et comportant des informations de synchronisation de temps et de référence de position, le dispositif de radio-navigation étant apte à mettre en œuvre un traitement des signaux de radio-navigation reçus pour calculer des premières informations de navigation comportant des informations de position de géolocalisation, vitesse et temps du porteur, et une station de traitement de référence.

Le système de validation de géolocalisation par satellite de l'invention est tel que :
- le dispositif de radio-navigation est apte à transmettre des signaux numérisés en bande de base à partir des signaux de radio-navigation reçus à la station de traitement de référence,
- la station de traitement de référence est apte à effectuer un traitement analogue au traitement effectué par ledit dispositif de radio-navigation des signaux numérisés pour calculer des deuxièmes informations de navigation,
- le système comporte des moyens de validation des premières informations de navigation en fonction des deuxièmes informations de navigation calculées par la station de traitement de référence.

Le système selon l'invention peut également présenter une ou plusieurs des caractéristiques ci-dessous :
- la station de traitement de référence comporte au moins un module apte à effectuer un traitement complémentaire des signaux numérisés en bande de base reçus, non effectué par le dispositif de radio-navigation, de manière à obtenir des deuxièmes informations de navigation de précision augmentée ;
- la station de traitement de référence comporte un module de calcul apte à calculer des deuxièmes informations de navigation à partir de signaux de radio-navigation émis par une pluralité de constellations de satellites, chaque constellation de satellites émettant selon un système de géolocalisation donné ;
- la station de traitement de référence comporte un module d'augmentation de précision spatiale, mettant en œuvre le traitement d'informations locales de corrections différentielles reçues d'une station de référence au sol ;
- la station de traitement de référence comporte un module de calcul de positionnement de géolocalisation mettant en œuvre des fréquences des porteuses des signaux numérisés en bande de base reçus ;
- la station de traitement de référence comporte un module de surveillance d'intégrité des signaux numérisés en bande de base reçus ;
- la station de traitement de référence comporte un module de surveillance de brouillage et de leurrage sur les signaux numérisés en bande de base ;
- la station de traitement de référence comporte un module de validation, apte à valider le respect de réglementations de sécurité locales et à fournir une surveillance d'une qualité de réception au niveau du dispositif de radio-navigation embarqué, comprenant une détection de sources d'interférence, de brouillage et de leurrage, ainsi que des informations de précision augmentée ;
- les moyens de validation des premières informations de navigation en fonction des deuxièmes informations de navigation calculées par la station de traitement de référence sont mis en œuvre par un module de validation du dispositif de radio-navigation, apte à recevoir du module de validation de la station de traitement de référence, outre les deuxièmes informations de navigation, des informations de contrôle élaborées par la station de traitement de référence, comprenant lesdites informations de précision augmentée et lesdites informations relatives à la qualité de réception ;

D'autres caractéristiques et avantages de l'invention ressortiront de la description qui en est donnée ci-dessous, à titre indicatif et nullement limitatif, en référence aux figures annexées, parmi lesquelles :
- la figure 1 est une illustration schématique d'un système de géolocalisation mettant en œuvre l'invention;
- la figure 2 est un synoptique des principales étapes d'un procédé de validation de géolocalisation selon un mode réalisation de l'invention.

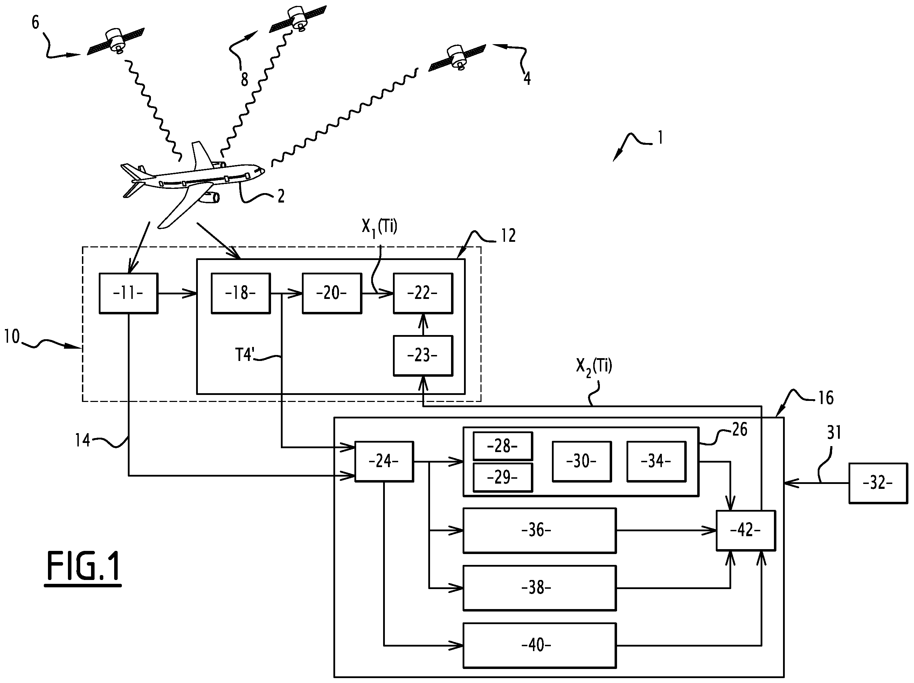

La figure 1 illustre un système de géolocalisation 1 adapté à mettre en œuvre l'invention, dans le contexte de l'aide à la navigation d'un porteur mobile 2, qui est dans l'exemple de la figure 1 un aéronef.

Comme déjà mentionné préalablement, l'invention ne se limite pas à ce mode de réalisation, et s'applique plus généralement pour la géolocalisation de tout porteur mobile.

Le porteur mobile 2 comporte des récepteurs (non représentés) aptes à recevoir des signaux radioélectriques dans plusieurs bandes de fréquences prédéfinies, contenant des informations de synchronisation de temps et de référence de position de plusieurs constellations de satellites de géolocalisation, par exemple une première constellation 4 de satellites du système GPS et une deuxième constellation 6 de satellites d'un autre système, par exemple Galileo.

De manière générale, le porteur mobile 2 est apte à recevoir des signaux radioélectriques en provenance d'un ou plusieurs systèmes de géolocalisation GNSS, qui sont susceptibles d'émettre dans des bandes de fréquences prédéfinies.

En outre, le porteur mobile 2 est apte à recevoir des données de correction et d'intégrité d'une constellation 8 de satellites géostationnaires, selon le système d'augmentation de précision spatiale utilisant des satellites géostationnaires, appelé SBAS (pour « satellite-based augmentation system »), qui sont également transmises dans ces signaux radioélectriques émis dans les mêmes bandes de fréquence prédéfinies.

De manière connue, le système SBAS utilise des satellites géostationnaires qui permettent l'augmentation d'une ou plusieurs constellations de satellites GNSS, tel le système GPS, aptes à envoyer aux récepteurs de géolocalisation des messages de correction comprenant des informations de correction de mesure de positionnement et d'intégrité relatives à chacun des satellites.

Le système SBAS tient compte d'erreurs provenant de sources distinctes : erreur ionosphérique, corrections d'horloge satellite, corrections de biais système. Il inclut des corrections d'orbite des satellites GNSS, et des corrections spécifiques des signaux émis par les satellites (retard de groupe, bras de levier, ...). Le système SBAS fournit également des informations d'intégrité, par exemple pour le calcul des rayons de protection associés aux positions calculées, destinées à quantifier la confiance associée aux informations de correction transmises.

Le standard technique RTCA DO-229D "Minimum Operational Performance Standards for Global Positioning System/Wide Area Augmentation System Airborne Equipment" définit le système d'augmentation spatiale SBAS par rapport au système GPS.

La présente invention porte sur l'amélioration de la sûreté des informations de navigation, fournies par l'équipement de géolocalisation bord, au travers d'une chaine de traitement de référence déportée au sol, permettant d'assurer en continu un calcul de positionnement sécurisé et augmenté, déporté au sein de ces infrastructures.

La présente invention est en particulier dédiée à l'amélioration à bord de la sûreté (et non de la seule sécurité) d'applications de navigation à haute intégrité (dites « Safety Of Life »), et porte sur le service global d'amélioration de la sûreté de la navigation, rendu possible au travers du principe de calcul de navigation déporté.

Le porteur mobile 2 comprend un dispositif de radio-navigation 10, comprenant un module de positionnement inertiel 11 et un dispositif de géolocalisation 12, qui fournissent conjointement des premières informations de navigation du porteur mobile 2, comprenant des informations de géolocalisation et des informations relatives à sa trajectoire, servant d'aide à la navigation par un pilote, ainsi qu'à la navigation automatique par instrumentation.

L'ensemble des équipements de bord est appelé « système bord ».

Le module de positionnement inertiel 11 est un instrument de navigation connu, capable d'estimer l'accélération et l'orientation du porteur mobile 2, et d'en déduire son attitude, sa vitesse et sa position.

Le module de positionnement inertiel 11 fournit des informations de positionnement inertiel 14, utilisées pour la navigation et également transmises, par des moyens de communication sans fil non représentés, à une station de traitement de référence 16, située au sol, appelée également « système sol », qui sera décrite plus en détail ci-après.

Ces moyens de communication sans fil sont par exemple un émetteur-récepteur radio ou GSM.

Ainsi, les premières informations de navigation comportent des informations de position, de temps, ainsi que des informations de vitesse (données PVT) et optionnellement, des informations d'attitude du porteur.

Dans un mode de réalisation, les informations de vitesse et d'attitude du porteur sont fournies par le module de positionnement inertiel 10.

Dans un mode de réalisation alternatif, les informations de vitesse et d'attitude du porteur sont calculées par combinaison des informations de positionnement inertiel et des informations de géolocalisation.

Le dispositif de géolocalisation 12, embarqué à bord du porteur mobile 2, comporte une chaîne RF 18 de réception et de numérisation des signaux radioélectriques reçus, un module de traitement embarqué 20 (appelé également COM) et un module 22 de validation des informations de navigation (PVT).

La chaîne RF 18 de réception et de numérisation des signaux dans l'espace (SIS) permet de recevoir des signaux radioélectriques émis dans des bandes de fréquence GNSS (par exemple les bandes de fréquence L1, L2 et L5 dans le cas du GPS).

De manière générale, la chaîne RF 18 est apte à recevoir des signaux RF₁,..., RF_{N} dans N bandes de fréquence, à les filtrer, à les transposer en fréquences et à les numériser pour obtenir des signaux IF₁,..., IF_{N} sur une même fréquence intermédiaire, appelés signaux numérisés en bande de base.

Ainsi, en sortie de la chaîne RF 18, les signaux en fréquence intermédiaire IF₁,...,IF_{N} sont transmis d'une part à la station de traitement de référence fixe 16, et d'autre part au module de traitement embarqué 20 pour application de traitements numériques.

Le module de traitement embarqué 20 est apte à traiter les signaux reçus de la constellation de satellites pour laquelle il est certifié, par exemple les signaux GPS et SBAS dans un mode de réalisation, pour calculer, en temps réel, le positionnement à chaque instant temporel de ce porteur mobile 2.

Le dispositif de radio-navigation 10 transmet ainsi les signaux numérisés IF₁,..., IF_{N}, à la station de traitement de référence 16, comportant à la fois les informations de synchronisation de temps et de référence de position transmises par les constellations de satellites 4, 6 et les données de correction et d'intégrité transmises par la constellation 8 de satellites géostationnaires.

Les signaux numérisés IF₁, ..., IF_{N} sont transmis en continu ou par impulsions 14', par un module de communication radiofréquence (non représenté) de bande passante suffisante, à un module récepteur de la station de traitement de référence 16.

Ainsi, avantageusement, la station de traitement de référence 16 reçoit les mêmes données numériques numérisés IF₁,..., IF_{N}, que le module de traitement embarqué 20.

Le module de traitement embarqué 20 comporte des éléments matériels et logiciels aptes à effectuer le calcul de sa position de géolocalisation, selon les trois composantes x, y et z de positionnement spatial dans un référentiel ECEF, ainsi qu'une composante temporelle reliant le temps du système GPS et le temps local du dispositif de géolocalisation.

En outre, le module de traitement embarqué 20 est apte à utiliser les signaux SBAS reçus, et à calculer un rayon d'intégrité associé au calcul de positionnement effectué.

Le module de traitement embarqué 20 comporte notamment un dispositif programmable apte à effectuer des calculs, comprenant notamment un ou plusieurs processeurs, et une ou des mémoires de stockage.

Le module de traitement 20 permet d'obtenir en sortie, à chaque instant temporel Ti considéré, un vecteur de position P(Ti) représentatif de la position de géolocalisation du porteur mobile, de sa vitesse et du temps local (données PVT), les instants temporels étant données dans un référentiel temporel universel et un rayon d'intégrité associé, regroupés en de premières informations de navigation X₁(Ti).

En variante, les données PVT sont obtenues par calcul hybride utilisant les vecteurs de position P(Ti) et les données d'orientation, de vitesse et de position/attitude fournies par le module de positionnement inertiel 11.

Ces premières informations de navigation X₁(Ti) sont transmises à un module 22 de validation, apte à utiliser des deuxièmes informations de navigation X2(Ti) ou des informations de validation en provenance de la station de traitement de référence fixe 16, pour valider la précision du dispositif de radio-navigation embarqué, et, le cas échéant, à mettre en œuvre une action corrective comme une levée d'alarme dans le cas où les premières informations de navigation calculées à bord ne seraient pas considérées valides.

Le module de validation 22 est implémenté dans un dispositif programmable apte à effectuer des calculs, comprenant notamment un ou plusieurs processeurs, et une ou des mémoires de stockage.

La station de traitement de référence 16 comprend un module de réception radiofréquence 24, ou récepteur, capable de recevoir les informations 14, 14', et à les distribuer vers des modules de la station de traitement de référence 16.

En particulier les signaux numérisés IF₁,..., IF_{N} sont transmis à un module de traitement GNSS 26.

Le module de traitement GNSS 26 comprend de premiers modules de traitement fixe (MON), 28, 29, aptes à mettre en œuvre au minimum des traitements semblables à ceux du module de traitement embarqué (COM) 20, pour calculer des informations de navigation du porteur, en utilisant des éléments matériels et logiciels propres à la station de traitement de référence 16, qui sont totalement indépendants des éléments matériels et logiciels embarqués.

Le module de traitement fixe 28 est apte à effectuer des calculs de position de géolocalisation du porteur mobile 2 analogues à ceux effectués par le module de traitement embarqué 20, en utilisant les signaux IF₁,..., IF_{N} contenant des informations de synchronisation de temps et de référence de position des satellites, ainsi que les données de correction et d'intégrité.

Avantageusement, le module de traitement fixe 28 permet ainsi de dupliquer fonctionnellement les traitements effectués à bord du porteur mobile 2, de manière ségréguée, et par conséquent de valider notamment le bon fonctionnement des éléments matériels et logiciels du module de traitement embarqué 20.

En cas de fonctionnement nominal de l'équipement de bord, le module de traitement 28 fournit des deuxièmes informations de navigation quasi identiques aux premières informations de navigation calculées à bord, au bruit instrumental près.

Le module de traitement 28 duplique le traitement des signaux de radio-navigation reçus effectué à bord par le module de traitement embarqué 20, qui est limité, pour des raisons de complexité et de coût, à l'exploitation des signaux de radio-navigation d'une seule constellation de satellites qui est la constellation GPS.

Le module de traitement multi-constellation 29 est apte à utiliser les signaux de radio-navigation reçus de plusieurs constellations de satellites. Ainsi, le module de traitement multi-constellation 29 est apte à calculer, en parallèle avec le module de traitement 28, des deuxièmes informations de navigation de précision améliorée. Ce module de traitement multi-constellation 29 réalise la surveillance de la navigation GPS et met en œuvre l'utilisation de constellations régionales qui peut être imposée par des mandats nationaux.

Ainsi, dans un mode de réalisation, le module de traitement fixe 28 est apte à exploiter les signaux de radio-navigation GPS et les messages de correction SBAS, de manière analogue au traitement effectué à bord par le module de traitement embarqué 20. Le module de traitement multi-constellation 29 exploite des signaux de radio-navigation transmis par d'autres constellations de satellites, par exemple GALILEO et/ou GLONASS.

Les modules de traitement 28 et 29 effectuent des calculs de position, vitesse et temps associé (PVT) multi-constellations, sur la base des signaux d'entrée IF₁,..., IF_{N} communs. La datation temporelle est effectuée dans un référentiel de temps universel par exemple UTC, et le positionnement est calculé dans un repéré géodésique commun (WGS84).

Ainsi, les deuxièmes informations de navigation calculées par la station de traitement de référence 16 sont renforcées.

Dans le mode de réalisation illustré, le module de traitement GNSS 26 comprend également un module d'augmentation de précision spatiale 30, apte à recevoir localement des informations de corrections différentielles 31 issues d'une station de référence au sol 32. Ainsi, un calcul de correction de positionnement est effectué par le module d'augmentation de précision spatiale 30, en fonction de la position connue de la station de référence au sol 32 et en environnement radiofréquence contrôlé.

Le module de traitement GNSS 26 comprend également un module de calcul 34, apte à effectuer des calculs supplémentaires permettant d'obtenir une meilleure précision de positionnement de géolocalisation.

De préférence, le module de traitement 34 applique un traitement RTK (« real time kinematics »), utilisant les phases des porteuses des signaux IF₁,..., IF_{N} ce qui permet d'atteindre une performance de positionnement centimétrique pour le vecteur de position P'(Ti) calculé.

En supplément, la station de traitement de référence 16 comprend un module de surveillance de la qualité des signaux 36.

Ce module de surveillance de la qualité des signaux 36 utilise des signaux reçus par la station de référence au sol 32. Il utilise également les signaux IF₁,... ,IF_{N} pour effectuer des traitements connus de surveillance d'intégrité, par exemple l'analyse spectrale, l'analyse de forme de corrélation, ou d'autres techniques connues pour la détection d'erreur associées aux trajets multiples.

Avantageusement, la station de traitement de référence 16 dispose de ressources de traitements puissants permettant une surveillance plus étendue des domaines de perturbations, tels que le nombre de points de corrélations décrivant la fonction de corrélation du signal ou encore le domaine spectral et la résolution de couverture par les moyens d'analyse spectrale, mis en œuvre par un ou plusieurs modules de calcul d'analyse spectrale.

En supplément et de manière optionnelle, la station de traitement de référence 16 comprend un module de surveillance de brouillage et de leurrage 38 qui utilise des algorithmes de vérification des signaux reçus permettant de détecter d'éventuelles incohérences et de lever des alertes en cas de détection.

L'observation conjointe des mesures faites sur les différentes constellations et les différents services de navigation reçus dans la même bande de fréquence constitue un premier niveau d'analyse. Un deuxième niveau consiste à comparer les informations de navigations délivrées simultanément à partir des signaux ouverts et des signaux protégés (P(Y) GPS ou PRS Galileo), lorsque la station de traitement de référence est autorisée à traiter les signaux protégés. Un troisième niveau consiste à estimer la cohérence des mesures de phase de code et de porteuse, sur l'ensemble des signaux reçus.

En outre, la station de traitement de référence 16 comprend un module de calcul de position de géolocalisation composite 40 utilisant les informations 14 fournies par le module de positionnement inertiel 11.

Ce module de position de géolocalisation composite 40 met en œuvre un traitement d'hybridation entre les signaux GNSS IF₁,..., IF_{N} reçus et les informations 14 d'incréments inertiels pour calculer avec une meilleure précision la position et vitesse du porteur mobile à chaque instant temporel considéré.

De façon semblable au traitement bord, le traitement d'hybridation sol permet aussi de mener un contrôle d'intégrité de la solution hybride du type maximum de séparation, sous l'hypothèse de panne satellite simple, mais qui peut être étendue au cas de pannes satellite multiples, du fait de la réserve de ressource de calcul au sol.

Les sorties des modules respectifs 26 (incluant les modules 28, 29, 30 et 34), 36, 38 et 40 sont fournies à un module de validation fixe 42 de la station de traitement de référence 16 qui calcule des deuxièmes informations de navigation X2(Ti), comprenant un ensemble d'informations PVT corrigées et des rayons de protection associés.

Ce module de validation 42, sous-contrôle des autorités de navigation locales, permet au système sol :
- de vérifier que les réglementations de sécurité demandées par les autorités nationales locales sont correctement respectées par le système bord ;
- de fournir une surveillance de la qualité de l'environnement de réception notamment la détection de sources d'interférence, de brouillage et de leurrage ainsi que l'estimation de leur impact sur la navigation estimée à bord ;
- de renforcer la qualité de la navigation bord par les estimations consolidées (multi-constellation, augmentation, assistances et RTK) obtenues à partir des traitements augmentés au sol.

Selon un premier mode de réalisation, ces deuxièmes informations de navigation X2(Ti) sont transmises au module de validation embarqué 22, qui vérifie la cohérence entre les informations de positionnement et de vitesse fournies par les deux voies de traitement.

Le module de validation embarqué 22 ainsi que le module de validation associé au traitement effectué au sol 23, installé à bord, effectue la comparaison croisée des positions et vitesses, pour commander une action corrective, par exemple une coupure d'émission des informations de navigation vers le reste du système de navigation, en cas d'écart constaté. Le module 23 de validation à bord des informations élaborées au sol permet au système bord sous contrôle de l'autorité bord (le pilote) de prendre en compte et de valider les informations issues du module 42 de validation au sol soumis aux autorités nationales locales, avant comparaison des informations de navigation sol avec les informations de navigation bord issues du module 20.

Le système bord reçoit du sol via le module 42 les statuts suivants :
- Estimation au sol de la navigation bord : deuxièmes informations de navigation estimées par le module de traitement 28, qui duplique les traitements effectués par le module 20 à bord,
- Etat de l'environnement d'interférence, brouillage et leurrage et impact sur la navigation bord ;
- Estimation au sol de la navigation bord augmentée :
   ▪ Estimation avec les constellations mandatées par les autorités nationales : deuxièmes informations de navigation estimées par le module de traitement multi-constellation 29 ;
   ▪ Estimation avec tous systèmes d'augmentation locale (GBAS, RTK, assisted-GNSS) mis en œuvre par les modules 30, 34
   ▪ Estimation avec toutes ressources de traitements améliorés, en particulier le module 40 (hybridation inertielle, ...).

Selon ce mode de réalisation, le module de validation 22 calcule les écarts entre les premières informations de navigation X₁(Ti) calculées à bord et les deuxièmes informations de navigation X2(Ti) de meilleure précision calculées au sol, et détermine des alertes de non cohérence lorsque l'écart dépasse un seuil prédéterminé.

Selon un deuxième mode de réalisation, des alertes sont transmises au module de validation embarqué 22, qui effectue une action corrective à bord du porteur mobile.

Dans ce mode de réalisation, les alertes levées par le module de validation embarqué 22, pourront conduire selon les réglementations locales en cours :
- soit à abandonner la procédure de vol en cours et effectuer le basculement sur les moyens de navigation complémentaires prévus par la réglementation,
- soit à basculer sur les estimations de navigation envoyées par la station de référence sol validées par le module 42.

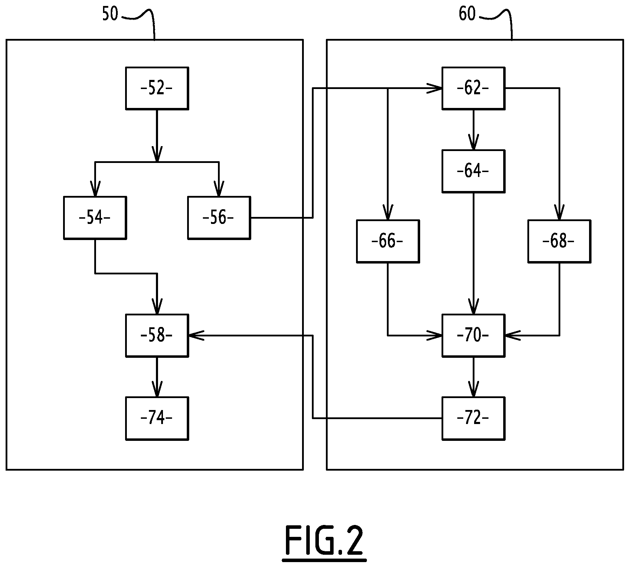

La figure 2 est un synoptique des principales étapes d'un procédé de validation d'un dispositif de radio-navigation embarqué à bord d'un porteur mobile selon un mode de réalisation de l'invention, dont les étapes 50 sont mises en œuvre par un dispositif de radio-navigation 10 embarqué à bord d'un porteur mobile et les étapes 60 sont mises en œuvre par une station de traitement de référence 16.

La première étape 52 est une étape de réception de signaux radioélectriques en provenance des satellites, de filtrage et de numérisation pour obtenir des signaux en bande de base IF₁,..., IF_{N}. Ces signaux contiennent des signaux de radio-navigation des constellations de satellites, contenant des informations de synchronisation de temps et de référence de position des satellites, ainsi que les données de correction et d'intégrité.

Les étapes suivantes 54 et 56 sont mises en œuvre sensiblement en parallèle.

Lors de l'étape 54, le dispositif de radio-navigation 10 met en œuvre un calcul permettant d'obtenir des premières informations de navigation X₁(Ti) du porteur à des instants temporels donnés Ti.

En variante, le calcul de l'étape 54 met en œuvre une hybridation des informations de synchronisation de temps et de référence position reçues des signaux de radio-navigation des satellites et des informations de synchronisation de temps et de référence de position inertiel ou incréments inertiels, fournies par le module de positionnement inertiel 11.

L'étape de transmission 56 met en œuvre la transmission des informations de synchronisation de temps et de référence de position contenues dans les signaux numérisés IF₁,..., IF_{N} à la station de traitement de référence 16.

Optionnellement, des informations de positionnement inertiel ou incréments inertiels fournies par un module de positionnement inertiel embarqué sont également transmises.

La station de traitement de référence 16 met en œuvre une réception 62 des signaux numérisés IF₁,..., IF_{N}, et, le cas échéant, des informations de positionnement inertiel transmises.

Ensuite, la station de traitement de référence 16 met en œuvre un calcul 64, permettant de calculer des deuxièmes informations de navigation X2(Ti). Les algorithmes mis en œuvre lors de cette étape 64 sont analogues aux algorithmes mis en œuvre par l'étape de calcul 54, par exemple des algorithmes de calcul de géolocalisation PVT selon le système GPS / SBAS.

Dans le cas où il n'y a pas de dysfonctionnement matériel ou d'erreur de calcul du matériel embarqué mettant en œuvre l'étape 54, les deuxièmes informations de navigation X2(Ti) calculées à l'étape 64 sont sensiblement identiques, au bruit instrumental près, aux premières informations de navigation X₁(Ti) calculées à l'étape 54 aux mêmes instants temporels.

Une différence entre les deuxièmes informations de navigation X2(Ti) calculées à l'étape 64 et les premières informations de navigation X₁(Ti) calculées à l'étape 54 indique un dysfonctionnement matériel au niveau du dispositif de géolocalisation 12.

Il est à noter qu'un dysfonctionnement matériel au niveau de la station de traitement de référence 16 pourrait également être envisagé. Cependant, dans le mode de réalisation préféré de l'invention, il est considéré que le matériel de la station de traitement de référence 16 est maintenu de manière à éviter les défaillances matérielles.

Afin d'améliorer la précision et l'intégrité des deuxièmes informations de navigation X2(Ti), de préférence, la station de traitement de référence 16 met en œuvre en outre plusieurs traitements complémentaires.

Dans le mode de réalisation de la figure 2, un premier traitement complémentaire 66 et des deuxièmes traitements complémentaires 68 sont mis en œuvre.

Un premier traitement complémentaire 66 met en œuvre un calcul de deuxièmes informations de navigation X2(Ti) de type multi-constellation, exploitant les signaux de radio-navigation reçus à partir de plusieurs constellations de satellites émettant selon plusieurs systèmes GNSS. Par exemple, des signaux de radio-navigation GALILEO sont également exploités, conjointement aux signaux de radio-navigation GPS exploités lors de l'étape de calcul 54. Ainsi, une meilleure intégrité et disponibilité est obtenue pour le calcul des deuxièmes informations de navigation X2(Ti).

Les deuxièmes traitements complémentaires 68 sont :
- le calcul du positionnement de géolocalisation en mettant en œuvre des fréquences des porteuses des signaux numérisés en bande de base reçus, en mode RTK, fournissant un positionnement différentiel de précision centimétrique ;
- l'augmentation de précision spatiale, mettant en œuvre le traitement d'informations locales de corrections différentielles reçues d'une station de traitement de référence au sol ;
- la mise en œuvre d'une surveillance d'intégrité des signaux numérisés en bande de base reçus ;
- la mise en œuvre d'une surveillance de brouillage et de leurrage réalisée à partir des signaux numérisés en bande de base (IF₁, ..., IF_{N}) ;
- un traitement d'hybridation entre les signaux GNSS IF₁,..., IF_{N} reçus et les informations d'incréments inertiels pour calculer avec une meilleure précision la position et vitesse du porteur mobile à chaque instant temporel considéré.

Il est clair que la mise en œuvre de l'invention n'est pas limitée à ces seuls traitements complémentaires, mais s'applique avec un nombre plus grand de traitements complémentaires qui sont susceptibles d'apporter des précisions supplémentaires et de consolider l'intégrité et la continuité de la solution de positionnement calculée par la station de traitement de référence par mise en œuvre d'algorithmes de calcul plus sophistiqués ou utilisant des informations complémentaires externes enrichies.

Avantageusement, la station de traitement de référence 16 dispose de moyens de calcul adéquats, par exemple une pluralité de processeurs ou calculateurs, permettant d'effectuer un gros volume de calculs en temps réel. Ainsi, la station de référence met en œuvre tous les modules de traitement décrits ci-dessus.

Le divers calculs de positionnement et mesures d'intégrité sont transmis à un module d'intégration 70, qui calcule les deuxièmes informations de navigation X2(Ti) plus précises à partir de l'ensemble des traitements 64, 66, 68 mis en œuvre et des rayons de protection associés.

Ces deuxièmes informations de navigation X2(Ti) sont transmises lors de l'étape de transmission 72 au dispositif de géolocalisation 12.

Le dispositif de géolocalisation 12 met en œuvre une étape 58 de validation, utilisant une comparaison des premières informations de navigation X₁(Ti) et des deuxièmes informations de navigation X2(Ti).

L'étape 58 de validation met en œuvre des algorithmes de vérification ou de cross-checking connus dans le domaine de l'aéronautique sous l'appellation « Fail-Safe ». Un système dit "fail-safe" signifie que la conception du système atténue la dangerosité d'une défaillance, et donc qu'il reste au moins aussi sûr que lorsqu'il fonctionne correctement.

Dans le cas où une différence entre premières et deuxièmes informations de navigation à des instants donnés dépasse un seuil prédéterminé, une alarme est levée lors d'une étape 74.

Ainsi, les deux voies de calcul COM et MON élaborent en parallèle les informations de navigation. Le résultat de ces calculs est comparé par chacune des voies. Si une différence significative des calculs est constatée par l'une des deux voies, elle active un interrupteur « switch out » qui permet d'interrompre physiquement l'émission des données calculées vers les sous-ensembles utilisateurs, évitant la diffusion de données erronées non signalées vers le système bord de navigation.

Avantageusement, la solution proposée par l'invention met en œuvre des chaînes dissimilaires COM (commande bord) et MON (monitoring sol) permettant d'assurer l'indépendance des pannes pour éviter qu'une panne simple n'entraîne un défaut non détecté et pour améliorer l'intégrité globale de la navigation. Pour garantir un haut niveau de sécurité, il est préférable que les modules MON_ et COM_ aient des architectures hardware (HW) et logicielles (SW) différentes, de manière à éviter le risque de panne commune simultanée non détectée par chacune des deux chaines de traitement.

Un principal avantage de la solution proposée est de pouvoir effectuer de tels contrôles sur les mêmes signaux que ceux qui sont utilisés par le système de traitement bord, et non au travers d'observations déportées qui ne reflètent pas totalement le comportement des signaux reçus à bord, et notamment, celui des perturbations locales de l'environnement bord (trajets multiples, interférences, sauts de cycles, ...).

## Revendications

1. Procédé de validation d'un dispositif de radio-navigation (10) embarqué à bord d'un porteur mobile (2), comportant un dispositif de géolocalisation (12) par satellite apte à recevoir un signal radioélectrique composite comportant une pluralité de signaux de radio-navigation émis chacun par un satellite émetteur et comportant des informations de synchronisation de temps et de référence de position, le dispositif de radio-navigation comportant un module de traitement embarqué (20) comportant des éléments matériels et logiciels aptes à mettre en œuvre un traitement (54) des signaux de radio-navigation reçus pour calculer des premières informations de navigation comportant des informations de position de géolocalisation, vitesse et temps du porteur,
**caractérisé en ce qu'**il comporte les étapes consistant à :
- transmettre (54, 56), par ledit dispositif de radio-navigation, des signaux numérisés en bande de base (IF₁, ..., IF_{N}) à partir des signaux de radio-navigation reçus à une station de traitement de référence (16),
- mettre en œuvre, par ladite station de traitement de référence (16), un traitement (64) analogue au traitement (54) effectué par ledit dispositif de radio-navigation des signaux numérisés en bande de base (IF₁, ..., IF_{N}) pour calculer des deuxièmes informations de navigation,
- valider (58) les premières informations de navigation en fonction des deuxièmes informations de navigation calculées par la station de traitement de référence (16), la validation permettant de valider le bon fonctionnement des éléments matériels et logiciels du module de traitement embarqué (20) du dispositif de radio-navigation (10).

2. Procédé selon la revendication 1, **caractérisé en ce que** le calcul des premières informations de navigation utilise en outre des informations de positionnement inertiel fournies par un module de positionnement inertiel (11) associé au dispositif de radio-navigation (10), et **en ce que** l'étape de transmission (54, 56) comporte en outre une transmission desdites informations de positionnement inertiel associé au dispositif de radio-navigation vers la station de traitement de référence.

3. Procédé selon l'une quelconque des revendications 1 à 2, **caractérisé en ce qu'**il comporte en outre une étape (66, 68), mise en œuvre par ladite station de traitement de référence (16), consistant à effectuer au moins un traitement complémentaire des signaux numérisés en bande de base (IF₁, ..., IF_{N}) reçus, non effectué par le dispositif de radio-navigation, de manière à obtenir des deuxièmes informations de navigation de précision augmentée.

4. Procédé selon la revendication 3, **caractérisé en ce que** la station de traitement de référence (16) est apte à calculer (66) des deuxièmes informations de navigation à partir de signaux de radio-navigation émis par une pluralité de constellations de satellites, chaque constellation de satellites émettant selon un système de géolocalisation donné.

5. Procédé selon l'une quelconque des revendications 3 à 4, **caractérisé en ce qu'**au moins un traitement complémentaire (68) consiste en la mise en œuvre d'une étape d'augmentation de précision spatiale, mettant en œuvre le traitement d'informations locales de corrections différentielles (31) reçues d'une station de référence au sol (32).

6. Procédé selon l'une quelconque des revendications 3 à 5, **caractérisé en ce qu'**au moins un traitement complémentaire (68) consiste en la mise en œuvre d'une étape de calcul de positionnement de géolocalisation mettant en œuvre des fréquences des porteuses des signaux numérisés en bande de base (IF₁, ..., IF_{N}) reçus.

7. Procédé selon l'une quelconque des revendications 3 à 6, **caractérisé en ce qu'**au moins un traitement complémentaire (68) consiste en la mise en œuvre d'une surveillance d'intégrité des signaux numérisés en bande de base (IF₁, ..., IF_{N}) reçus et/ou au moins un traitement complémentaire (68) consiste en la mise en œuvre d'une surveillance de brouillage et de leurrage des signaux numérisés en bande de base (IF₁, ..., IF_{N}).

8. Système de validation de géolocalisation par satellite, comprenant un dispositif de radio-navigation (10) embarqué à bord d'un porteur mobile (2), comportant un dispositif de géolocalisation (12) par satellite apte à recevoir un signal radioélectrique composite comportant une pluralité de signaux de radio-navigation émis chacun par un satellite émetteur et comportant des informations de synchronisation de temps et de référence de position, le dispositif de radio-navigation (10) comportant un module de traitement embarqué (20) comportant des éléments matériels et logiciels aptes à mettre en œuvre un traitement des signaux de radio-navigation reçus pour calculer des premières informations de navigation comportant des informations de position de géolocalisation, vitesse et temps du porteur, et une station de traitement de référence (16),
**caractérisé en ce que** :
- le dispositif de radio-navigation (10) est apte à transmettre des signaux numérisés en bande de base (IF₁, ..., IF_{N}) à partir des signaux de radio-navigation reçus à la station de traitement de référence (16),
- la station de traitement de référence (16) est apte à effectuer un traitement (28) analogue au traitement (20) effectué par ledit dispositif de radio-navigation (10) des signaux numérisés (IF₁, ..., IF_{N}) pour calculer des deuxièmes informations de navigation,
- le système comporte des moyens (22, 42) de validation des premières informations de navigation en fonction des deuxièmes informations de navigation calculées par la station de traitement de référence (16), la validation permettant de valider le bon fonctionnement des éléments matériels et logiciels du module de traitement embarqué (20) du dispositif de radio-navigation (10).

9. Système selon la revendication 8, **caractérisé en ce que** la station de traitement de référence (16) comporte au moins un module (29, 30, 34, 36, 38, 40) apte à effectuer un traitement complémentaire des signaux numérisés en bande de base (IF₁, ..., IF_{N}) reçus, non effectué par le dispositif de radio-navigation (10), de manière à obtenir des deuxièmes informations de navigation de précision augmentée.

10. Système selon la revendication 9, **caractérisé en ce que** la station de traitement de référence (16) comporte un module (29) de calcul apte à calculer des deuxièmes informations de navigation à partir de signaux de radio-navigation émis par une pluralité de constellations de satellites, chaque constellation de satellites émettant selon un système de géolocalisation donné.

11. Système selon l'une quelconque des revendications 9 à 10, **caractérisé en ce que** la station de traitement de référence (16) comporte un module (30) d'augmentation de précision spatiale, mettant en œuvre le traitement d'informations locales de corrections différentielles (31) reçues d'une station de référence au sol (32).

12. Système selon l'une quelconque des revendications 10 à 11, **caractérisé en ce que** la station de traitement de référence (16) comporte un module (34) de calcul de positionnement de géolocalisation mettant en œuvre des fréquences des porteuses des signaux numérisés en bande de base (IF₁, ..., IF_{N}) reçus.

13. Système selon l'une quelconque des revendications 10 à 12, **caractérisé en ce que** la station de traitement de référence (16) comporte un module (36) de surveillance d'intégrité des signaux numérisés en bande de base (IF₁, ..., IF_{N}) reçus et/ou la station de traitement de référence (16) comporte un module (38) de surveillance de brouillage et de leurrage sur les signaux numérisés en bande de base (IF₁, ..., IF_{N}).

14. Système selon l'une quelconque des revendications 8 à 13, **caractérisé en ce que** la station de traitement de référence (16) comporte un module de validation (42), apte à valider le respect de réglementations de sécurité locales et à fournir une surveillance d'une qualité de réception au niveau du dispositif de radio-navigation embarqué, comprenant une détection de sources d'interférence, de brouillage et de leurrage, ainsi que des informations de précision augmentée.

15. Système selon la revendication 14, **caractérisé en ce que** les moyens de validation des premières informations de navigation en fonction des deuxièmes informations de navigation calculées par la station de traitement de référence (16) sont mis en œuvre par un module (22) de validation du dispositif de radio-navigation (10), apte à recevoir du module de validation (42) de la station de traitement de référence (16), outre les deuxièmes informations de navigation, des informations de contrôle élaborées par la station de traitement de référence, comprenant lesdites informations de précision augmentée et lesdites informations relatives à la qualité de réception.

## Patentansprüche

1. Verfahren zur Validierung einer Funknavigation-Vorrichtung (10), die an Bord eines mobilen Trägers (2) untergebracht ist, aufweisend eine Vorrichtung zur Geolokalisierung (12) via Satellit, die imstande ist, ein funkelektrisches Composite-Signal zu empfangen, das eine Mehrzahl von Funknavigation-Signalen enthält, die jeweils von einem Satelliten-Sender ausgesandt werden und die Informationen zur Zeitsynchronisation und zur Referenzposition enthalten, wobei die Funknavigation-Vorrichtung aufweist ein bordseitiges Verarbeitungsmodul (20), das Hardware- und Software-Elemente aufweist, die imstande sind, eine Verarbeitung (54) der empfangenen Funknavigation-Signale durchzuführen zum Berechnen erster Navigations-Informationen, die Informationen zur Geolokalisierungs-Position, Geschwindigkeit und Zeit des Trägers enthalten,
**dadurch gekennzeichnet, dass** es die Schritte aufweist, bestehend aus:
- Senden (54, 56), mittels der Funknavigation-Vorrichtung, von digitalen Basisband-Signalen (IF₁, ..., IF_{N}) ausgehend von den empfangenen Funknavigation-Signalen an eine Referenz-Verarbeitungsstation (16),
- Durchführen, mittels der Referenz-Verarbeitungsstation (16), einer Verarbeitung (64), analog zu der Verarbeitung (54), die von der Funknavigation-Vorrichtung durchgeführt wird, der digitalen Basisband-Signale (IF₁, ..., IF_{N}) zum Berechnen zweiter Navigations-Informationen,
- Validieren (58) der ersten Navigations-Informationen in Abhängigkeit von den zweiten Navigations-Informationen, die mittels der Referenz-Verarbeitungsstation (16) berechnet wurden, wobei die Validierung erlaubt, das gute Funktionieren der Hardware- und Software-Elemente des bordseitigen Verarbeitungsmoduls (20) der Funknavigation-Vorrichtung (10) zu validieren.

2. Verfahren gemäß Anspruch 1, **dadurch gekennzeichnet, dass** das Berechnen der ersten Navigations-Informationen ferner verwendet Informationen zur Inertial-Position, die von einem Inertial-Position-Modul (11) geliefert werden, das mit der Funknavigation-Vorrichtung (10) verknüpft ist, und dass der Schritt des Sendens (54, 56) ferner aufweist ein Senden dieser Inertial-Position-Informationen, verknüpft mit der Funknavigations-Vorrichtung, zu der Referenz-Verarbeitungsstation.

3. Verfahren gemäß irgendeinem der Ansprüche 1 bis 2, **dadurch gekennzeichnet, dass** es ferner aufweist einen Schritt (66, 68), der von der Referenz-Verarbeitungsstation (16) durchgeführt wird, bestehend aus Durchführen wenigstens einer komplementären Verarbeitung der empfangenen digitalen Basisband-Signale (IF₁, ..., IF_{N}), nicht durchgeführt von der Funknavigations-Vorrichtung, um die zweiten Navigations-Informationen mit erhöhter Präzession zu erlangen.

4. Verfahren gemäß Anspruch 3, **dadurch gekennzeichnet, dass** die Referenz-Verarbeitungsstation (16) imstande ist, die zweiten Navigations-Informationen zu berechnen (66) ausgehend von Funknavigation-Signalen, die von einer Mehrzahl von Satelliten-Konstellationen ausgesendet werden, wobei jede Satelliten-Konstellation gemäß einem gegebenen Geolokalisierungs-System sendet.

5. Verfahren gemäß irgendeinem der Ansprüche 3 bis 4, **dadurch gekennzeichnet, dass** wenigstens eine komplementäre Verarbeitung (68) besteht aus dem Durchführen eines Schritts zum Erhöhen der räumlichen Präzession, durchführend die Verarbeitung von lokalen Informationen für differentielle Korrekturen (31), die von einer Referenz-Station am Boden (32) aus empfangen werden.

6. Verfahren gemäß irgendeinem der Ansprüche 3 bis 5, **dadurch gekennzeichnet, dass** wenigstens eine komplementäre Verarbeitung (68) besteht aus dem Durchführen eines Schritts zum Berechnen der Geolokalisierung-Positionierung unter Umsetzen von Frequenzen von Trägern der empfangenen digitalen Basisband-Signale (IF₁, ..., IF_{N}).

7. Verfahren gemäß irgendeinem der Ansprüche 3 bis 6, **dadurch gekennzeichnet, dass** wenigstens eine komplementäre Verarbeitung (68) besteht aus dem Durchführen einer Integritäts-Überwachung der empfangenen digitalen Basisband-Signale (IF₁, ..., IF_{N}) und/oder wenigstens eine komplementäre Verarbeitung (68) besteht aus dem Durchführen einer Störungs- und Täuschungs-Überwachung der digitalen Basisband-Signale (IF₁, ..., IF_{N}).

8. System zur Validierung der Geolokalisierung via Satellit, aufweisend eine Funknavigation-Vorrichtung (10), die an Bord eines mobilen Trägers (2) untergebracht ist, aufweisend eine Vorrichtung zur Geolokalisierung (12) via Satellit, die imstande ist, ein funkelektrisches Composite-Signal zu empfangen, das eine Mehrzahl von Funknavigation-Signalen enthält, die jeweils von einem Satelliten-Sender ausgesandt werden und die Informationen zur Zeitsynchronisation und zur Referenzposition enthalten, wobei die Funknavigation-Vorrichtung (10) aufweist ein bordseitiges Verarbeitungsmodul (20), das Hardware- und Software-Elemente aufweist, die imstande sind, eine Verarbeitung der empfangenen Funknavigation-Signale durchzuführen zum Berechnen erster Navigations-Informationen, die Informationen zur Geolokalisierungs-Position, Geschwindigkeit und Zeit des Trägers enthalten, und eine Referenz-Verarbeitungsstation (16),
**dadurch gekennzeichnet, dass**
- die Funknavigation-Vorrichtung (10) imstande ist, digitale Basisband-Signale (IF₁, ..., IF_{N}) ausgehend von den empfangenen Funknavigation-Signalen an die Referenz-Verarbeitungsstation (16) zu senden,
- die Referenz-Verarbeitungsstation (16) imstande ist, eine Verarbeitung (28), analog zu der Verarbeitung (20), die von der Funknavigation-Vorrichtung (10) durchgeführt wird, der digitalen Basisband-Signale (IF₁, ..., IF_{N}) durchzuführen zum Berechnen zweiter Navigations-Informationen,
- das System aufweist Mittel (22, 42) zum Validieren der ersten Navigations-Informationen in Abhängigkeit von den zweiten Navigations-Informationen, die mittels der Referenz-Verarbeitungsstation (16) berechnet wurden, wobei die Validierung erlaubt, das gute Funktionieren der Hardware- und Software-Elemente des bordseitigen Verarbeitungsmoduls (20) der Funknavigation-Vorrichtung (10) zu validieren.

9. System gemäß Anspruch 8, **dadurch gekennzeichnet, dass** die Referenz-Verarbeitungsstation (16) aufweist wenigstens ein Modul (29, 30, 34, 36, 38, 40), das imstande ist, eine komplementäre Verarbeitung der empfangen digitalen Basisband-Signale (IF₁, ..., IF_{N}) durchzuführen, nicht durchgeführt von der Funknavigations-Vorrichtung (10), um die zweiten Navigations-Informationen mit erhöhter Präzession zu erlangen.

10. System gemäß Anspruch 9, **dadurch gekennzeichnet, dass** die Referenz-Verarbeitungsstation (16) aufweist ein Berechnungs-Modul (29), das imstande ist, die zweiten Navigations-Informationen zu berechnen ausgehend von Funknavigation-Signalen, die von einer Mehrzahl von Satelliten-Konstellationen ausgesendet werden, wobei jede Satelliten-Konstellation gemäß einem gegebenen Geolokalisierungs-System sendet.

11. System gemäß irgendeinem der Ansprüche 9 bis 10, **dadurch gekennzeichnet, dass** die Referenz-Verarbeitungsstation (16) aufweist ein Modul (30) zum Erhöhen der räumlichen Präzession, durchführend die Verarbeitung von lokalen Informationen für differentielle Korrekturen (31), die von einer Referenz-Station am Boden (32) aus empfangen werden.

12. System gemäß irgendeinem der Ansprüche 10 bis 11, **dadurch gekennzeichnet, dass** die Referenz-Verarbeitungsstation (16) aufweist ein Modul (34) zur Berechnung der Geolokalisierung-Positionierung unter Umsetzen von Frequenzen von Trägern der empfangenen digitalen Basisband-Signale (IF₁, ..., IF_{N}).

13. System gemäß irgendeinem der Ansprüche 10 bis 12, **dadurch gekennzeichnet, dass** die Referenz-Verarbeitungsstation (16) aufweist ein Modul (36) zur Integritäts-Überwachung der empfangenen digitalen Basisband-Signale (IF₁, ..., IF_{N}) und/oder die Referenz-Verarbeitungsstation (16) aufweist ein Modul (38) zur Überwachung von Störungen und Täuschungen auf den digitalen Basisband-Signalen (IF₁, ..., IF_{N}).

14. System gemäß irgendeinem der Ansprüche 8 bis 13, **dadurch gekennzeichnet, dass** die Referenz-Verarbeitungsstation (16) aufweist ein Validierungs-Modul (42), das imstande ist, die Einhaltung von lokalen Sicherheitsregelungen zu validieren und eine Überwachung einer Empfangsqualität hinsichtlich der bordseitigen Funknavigation-Vorrichtung, aufweisend ein Erfassen von Interferenz-, Störungs- und Täuschungs-Quellen, sowie Informationen mit erhöhter Präzession breitzustellen liefern.

15. System gemäß Anspruch 14, **dadurch gekennzeichnet, dass** die Mittel zur Validierung der ersten Navigations-Informationen in Abhängigkeit von den zweiten Navigations-Informationen, die von der Referenz-Verarbeitungsstation (16) berechnet wurden, umgesetzt sind durch ein Validierungs-Modul (22) der Funknavigation-Vorrichtung (10), das imstande ist, von dem Validierungs-Modul (42) der Referenz-Verarbeitungsstation (16), neben den zweiten Navigations-Informationen, SteuerInformationen zu empfangen, die von der Referenz-Verarbeitungsstation erstellt sind, enthaltend die Informationen mit erhöhter Präzession und die Informationen bezüglich der Empfangsqualität.

## Claims

1. A validation method of a radio navigation device (10) installed on board a mobile carrier (2), including a satellite geo-positioning device (12) able to receive a composite radio signal including a plurality of radio navigation signals each transmitted by a transmitting satellite and including time-synchronization and position-reference information, the radio navigation device comprising an onboard processing module (20) comprising hardware and software elements able to carry out processing (54) of the received radio navigation signals to calculate first navigation information including information on the geographical position, speed and time of the carrier,
**characterized in that** it comprises the following steps:
- transmitting (54, 56), by said radio navigation device, baseband digitized signals (IF₁, ..., IF_{N}) from the received radio navigation signals to a reference processing station (16),
- implementing, by said reference processing station (16), processing (64) similar to the processing (54) done by said radio navigation device of the baseband digitized signals (IF₁, ..., IF_{N}) to calculate second navigation information,
- validating (58) the first navigation information based on the second navigation information calculated by the reference processing station (16), the validation allowing to validate the proper operation of the hardware and software elements of the onboard processing module (20) of the radio navigation device (10).

2. The method according to claim 1, **characterized in that** the calculation of the first navigation information further uses inertial positioning information provided by an inertial positioning module (11) associated with the radio navigation device (10), and **in that** the transmission step (54, 56) further includes a transmission of said inertial positioning information associated with the radio navigation device to the reference processing station.

3. The method according to any one of claims 1 to 2, **characterized in that** it further includes a step (66, 68), carried out by said reference processing station (16), consisting of performing at least one additional processing operation of the received baseband digitized signals (IF₁, ..., IF_{N}), not done by the radio navigation device, so as to obtain second navigation information with augmented precision.

4. The method according to claim 3, **characterized in that** the reference processing station (16) is able to calculate (66) second navigation information from a radio navigation signal transmitted by a plurality of satellite constellations, each satellite constellation transmitting according to a given geo-positioning system.

5. The method according to any one of claims 3 to 4, **characterized in that** at least a complementary processing operation (68) consists of implementing a spatial precision augmenting step, carrying out the processing of local differential correction information (31) received from a ground reference station (32).

6. The method according to any one of claims 3 to 5, **characterized in that** at least one complementary processing step (68) consists of carrying out a step for calculating the geographical position implementing frequencies of the carriers of the received baseband digitized signals (IF₁, ..., IF_{N}).

7. The method according to any one of claims 3 to 6, **characterized in that** at least one complementary processing step (68) consists of carrying out a step for monitoring the integrity of the received baseband digitized signals (IF₁, ..., IF_{N}) and/or at least one complementary processing step (68) consists of carrying out a step for monitoring scrambling and decoys of the received baseband digitized signals (IF₁ ..., IF_{N}).

8. A system to validate geo-positioning by satellite, comprising a radio navigation device (10) installed on board a mobile carrier (2), includes a satellite geo-positioning device (12) able to receive a composite radio signal including a plurality of radio navigation signals each transmitted by a transmitting satellite and including time-synchronization and position-reference information, the radio navigation device (10) comprising an onboard processing module (20) comprising hardware and software elements able to carry out processing of the received radio navigation signals to calculate first navigation information including information on the geographical position, speed and time of the carrier, and a reference processing station (16),
**characterized in that**:
- the radio navigation device (10) is able to transmit baseband digitized signals (IF₁, ..., IF_{N}) from the received radio navigation signals to the reference processing station (16),
- the reference processing station (16) is able to perform processing (28) similar to the processing (20) done by said radio navigation device (10) of the digitized signals (IF₁, ..., IF_{N}) to calculate second navigation information,
- the system includes means (22, 42) for validating first navigation information based on the second navigation information calculated by the reference processing station (16), the validation allowing to validate the proper operation of the hardware and software elements of the onboard processing module (20) of the radio navigation device (10).

9. The system according to claim 8, **characterized in that** the reference processing station (16) includes at least one module (29, 30, 34, 36, 38, 40) capable of performing at least one additional processing operation of the received baseband digitized signals (IF₁, ..., IF_{N}), not done by the radio navigation device (10), so as to obtain second navigation information with augmented precision.

10. The system according to claim 9, **characterized in that** the reference processing station (16) includes a computing module (29) able to calculate second navigation information from a radio navigation signal transmitted by a plurality of satellite constellations, each satellite constellation transmitting according to a given geo-positioning system.

11. The system according to any one of claims 9 to 10, **characterized in that** the reference processing station (16) includes a module (30) for augmenting spatial precision augmenting step, carrying out the processing of local differential correction information (31) received from a ground reference station (32).

12. The system according to any one of claims 10 to 11, **characterized in that** the reference processing station (16) includes a module (34) for calculating the geographical position implementing frequencies of the carriers of the received baseband digitized signals (IF₁, ..., IF_{N}).

13. The system according to any one of claims 10 to 12, **characterized in that** the reference processing station (16) includes a module (36) for monitoring the integrity of the received baseband digitized signals (IF₁, ..., IF_{N}) and/or the reference processing station (16) includes a module (38) for monitoring scrambling and decoys of the baseband digitized signals (IF₁, ..., IF_{N}).

14. The system according to any one of claims 8 to 13, **characterized in that** the reference processing station (16) includes a validation module (42), able to validate compliance with local safety regulations and provide monitoring of reception quality at the onboard radio navigation device, comprising detecting sources of interference, scrambling and decoys, as well as augmented precision information.

15. The system according to claim 14, **characterized in that** the means for validating first navigation information based on second navigation information calculated by the reference processing station (16) are implemented by a validation module (22) of the radio navigation device (10), capable of receiving, from the validation module (42) of the reference processing station (16), aside from the second navigation information, control information developed by the reference processing station, comprising said augmented precision information and said information relative to the reception quality.
